(19) Europäisches Patentamt
European Patent Office
Office européen des brevets

(11) EP 4 400 537 A1

(12) EUROPEAN PATENT APPLICATION

(43) Date of publication:
**17.07.2024 Bulletin 2024/29**

(21) Application number: **23203498.3**

(22) Date of filing: **13.10.2023**

(51) International Patent Classification (IPC):
***C08J 9/02*** *(2006.01)* ***C08J 9/08*** *(2006.01)*
***C08J 9/14*** *(2006.01)* ***C08G 18/32*** *(2006.01)*

(52) Cooperative Patent Classification (CPC):
**C08J 9/08; C08G 18/163; C08G 18/1808; C08G 18/1816; C08G 18/225; C08G 18/3206; C08G 18/4018; C08G 18/42; C08G 18/48; C08G 18/6611; C08G 18/7664; C08J 9/02; C08J 9/142; C08J 9/144;** C08G 2110/0025; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.01.2023 KR 20230005540**
**17.08.2023 KR 20230107826**

(71) Applicant: **Seho Inc.**
**Iksan-si, Jeollabuk-do 54523 (KR)**

(72) Inventors:
- **LEE, Sung Wook**
**34118 Daejeon (KR)**
- **KIM, Hyun Jin**
**54843 Jeollabuk-do (KR)**
- **DHUN, Dup**
**54943 Jeollabuk-do (KR)**
- **KANG, Chan Hong**
**50898 Gyeongsangnam-do (KR)**
- **KANG, Dae Kwon**
**05676 Seoul (KR)**

(74) Representative: **Mewburn Ellis LLP**
**Aurora Building**
**Counterslip**
**Bristol BS1 6BX (GB)**

(54) **FOAMING AGENT COMPOSITION FOR POLYURETHANE AND METHOD OF PREPARING POLYURETHANE FOAM USING SAME**

(57) Disclosed are a foaming agent composition for polyurethane including glycerol carbonate as a chemical foaming agent and a physical foaming agent or a chemical foaming agent in a predetermined ratio (physico-chemical foaming agent), and polyurethane foam prepared using the same. The polyurethane foam has very low global warming potential and ozone depletion potential and simultaneously improved properties such as thermal conductivity, water absorption, flexural strength, and compressive strength that meet the standard for thermal insulation materials made of rigid urethane foam, and is effective at preventing internal shrinkage.

EP 4 400 537 A1

(52) Cooperative Patent Classification (CPC): (Cont.)
C08G 2110/005; C08G 2115/02; C08J 2203/02;
C08J 2203/12; C08J 2203/142; C08J 2203/162;
C08J 2203/184; C08J 2375/04

## Description

## CROSS-REFERENCE TO RELATED APPLICATION

This application claims priority to and the benefit of Korean Patent Application Nos. 10-2023-0005540 and 10-2023-0107826 filed in the Korean Intellectual Property Office on January 13, 2023 and August 17, 2023, respectively, the entire contents of which are incorporated herein by reference.

## BACKGROUND OF THE INVENTION

The present invention relates to a foaming agent composition for polyurethane and a method of preparing polyurethane foam using the same, and more particularly to a foaming agent composition for polyurethane and a method of preparing polyurethane foam using the same, in which the foaming agent composition includes glycerol carbonate as a chemical foaming agent and a physical foaming agent in a predetermined ratio, and thus exhibits very low global warming potential and ozone depletion potential and simultaneously improved properties such as thermal conductivity, water absorption, flexural strength, and compressive strength that meet the standard for thermal insulation materials made of rigid urethane foam, and is capable of preventing internal shrinkage.

Low-density rigid polyurethane foam has been used in various fields such as bedding such as mattresses and pillows, cushioning materials such as home chairs and automobile seats, roof systems, insulators for buildings such as building panels, and the like. An important factor for large-scale commercial use of rigid polyurethane foam is ability to provide good balancing properties. Rigid polyurethane foam is known to provide superior structural properties with excellent thermal insulation, good heat resistance, and a fairly low density. Liquid fluorocarbon foaming agents have been used in the foam industry due to ease of processing conditions.

Foam prepared using fluorine-containing olefin compounds that are foaming agents in the art, for example, HFO-1234ze (1,3,3,3-tetrafluoropropene), HCFO-1233zd (1-chloro-3,3,3-trifluoropropene), HFC-245fa (pentafluoropropane), HCFC-141b (1,1-dichloro-1-fluoroethane), etc., has superior properties such as low thermal conductivity and high dimensional stability and is thus widely used. However, the use of fluorine-containing olefin compounds has been decreasing in recent years as environmental issues are becoming more important because foaming agents are expensive and global warming potential (GWP) is very high.

In order to compensate for disadvantages of such fluorine-containing olefin compounds, hydrocarbon foaming agents such as iso-pentane, n-pentane, and cyclopentane may be used. The hydrocarbon foaming agent is environmentally friendly because ozone depletion potential (ODP) is zero and global warming potential is very low. However, foam prepared from these foaming agents is disadvantageous in that thermal insulation efficiency is lower than foam prepared using a fluorine-containing olefin compound as a foaming agent. In addition, the hydrocarbon foaming agent is uneconomical because the process and equipment are complicated due to insufficient miscibility with materials and additives essential for preparation of polyurethane foam, such as polyol, etc., and also, when additives, etc. are further included in the composition to improve various properties of polyurethane foam, mechanical properties of final polyurethane foam may be deteriorated, which is undesirable. Moreover, cyclopentane suffers from many difficulties in handling when used in actual processes due to flammability thereof.

In addition, since trans-1,2-dichloroethylene, which is another compound that may compensate for the disadvantages of fluorine-containing olefin compounds, has a boiling point of 48°C, it is a non-toxic material that is liquid at room temperature. This material does not deplete the ozone layer and has a very short atmospheric lifetime, so ozone depletion potential is very low. U.S. Patent No. 7,144,926 discloses a composition including trans-1,2-dichloroethylene and a hydrofluorocarbon compound, and Korean Patent No. 10-1532221 discloses a polyol premix composition including a mixture of a hydrohaloolefin foaming agent containing trans-1,2-dichloroethylene or the like, a polyol, a surfactant component that is a non-silicone surfactant and is substantially free of a silicone surfactant, and a tertiary amine catalyst. The above patents contain hydrofluorocarbons (HFCs) with high GWP and have few environmental problems, but are problematic in that hydrohaloolefins including hydrofluoroolefins (HFOs), which are very expensive and difficult to access economically, are used.

Also, methyl formate may be used as a foaming agent. Korean Patent Application Publication No. 10-2016-0023050 discloses a composition for forming rigid polyurethane foam including polyester polyol and/or polyether polyol and methyl formate as a foaming agent. When polyurethane foam is prepared using methyl formate, the foam shrinks so much that dimensional stability is poor, and miscibility with materials essential for preparation of polyurethane foam, such as polyol, etc., and storage stability are also poor.

In addition, research into using glycerol carbonate (glycerin carbonate or 4-hydroxymethyl-2-oxo-1,3-dioxolane) as a foaming agent has been carried out (Matthieu O. Sonnati et al., "Glycerol carbonate as a versatile building block for tomorrow: synthesis, reactivity, properties and applications", Green Chem., 2013, 15, 283-306; U.S. Patent No. 5,703,136; EP 0 419 114 A2). However, when glycerol carbonate, a chemical foaming agent, is used alone, foam

destabilization (splitting) and quick reaction occur due to internal heat generation, which is undesirable.

Therefore, a novel foaming agent capable of achieving superior properties of polyurethane foam prepared therefrom while minimizing disadvantages of existing foaming agents used in preparation of polyurethane foam and a composition for preparing polyurethane foam including the same are required.

Accordingly, the present inventors have made intensive efforts to solve the above problems, and ascertained that, when polyurethane foam is prepared using a foaming agent composition for polyurethane including glycerol carbonate as a chemical foaming agent and a physical foaming agent such as methyl formate and/or a chemical foaming agent such as polyhydric alcohol-based cyclic carbonate in a predetermined ratio (physicochemical foaming agent), properties such as thermal conductivity, water absorption, flexural strength, and compressive strength are very suitable for the standard for thermal insulation materials made of rigid urethane foam, and simultaneously global warming potential and ozone depletion potential are very low, confirming preparation of environmentally-friendly polyurethane foam, thus culminating in the present invention.

[Prior Art Documents]

[Patent Documents]

(Patent Document 1) U.S. Patent No. 5,703,136
(Patent Document 2) EP 0 419 114 A2

[Non-Patent Documents]

(Non-Patent Document 1) Matthieu O. Sonnati et al., "Glycerol carbonate as a versatile building block for tomorrow: synthesis, reactivity, properties and applications", Green Chem., 2013, 15, 283-306

## SUMMARY OF THE INVENTION

It is an object of the present invention to provide a foaming agent composition for polyurethane capable of preparing polyurethane foam having very low global warming potential and ozone depletion potential and improved performance such as thermal conductivity, water absorption, flexural strength, and compressive strength to meet the standard for thermal insulation materials made of rigid urethane foam, and a method of preparing polyurethane foam using the same.

In order to accomplish the above object, the present invention provides a foaming agent composition for polyurethane, including (i) glycerol carbonate and (ii) a physical foaming agent and/or a chemical foaming agent.

In addition, the present invention provides a method of preparing polyurethane foam, including (a) preparing a first solution including a polyol, a surfactant, water, a catalyst, trichloropropyl phosphate, and the foaming agent composition described above, (b) mixing 100 parts by weight of the first solution with 100 to 150 parts by weight of a second solution including polyisocyanate based on 100 parts by weight of the first solution, and (c) preparing polyurethane foam by reacting a mixture of the first solution and the second solution.

## DETAILED DESCRIPTION OF THE INVENTION

Unless otherwise defined, all technical and scientific terms used herein have the same meanings as typically understood by those skilled in the art to which the present invention belongs. In general, the nomenclature used herein is well known in the art and is typical.

In the present invention, when using a foaming agent composition for polyurethane including glycerol carbonate as a chemical foaming agent and a physical foaming agent such as methyl formate and/or a chemical foaming agent such as polyhydric alcohol-based cyclic carbonate in a predetermined ratio in the process of preparing polyurethane foam, properties such as thermal conductivity, water absorption, flexural strength, and compressive strength are improved to levels that meet the standard for thermal insulation materials made of rigid urethane foam, and simultaneously storage stability and compatibility are superior, and global warming potential and ozone depletion potential are very low, confirming preparation of environmentally-friendly polyurethane foam.

Accordingly, an aspect of the present invention pertains to a foaming agent composition for polyurethane (physicochemical foaming agent) including (i) glycerol carbonate and (ii) a physical foaming agent and/or a chemical foaming agent.

In addition, another aspect of the present invention pertains to a method of preparing polyurethane foam,

including (a) preparing a first solution including a polyol, a surfactant, water, a catalyst, trichloropropyl phosphate, and the foaming agent composition described above, (b) mixing 100 parts by weight of the first solution with 100 to 150 parts by weight of a second solution including polyisocyanate based on 100 parts by weight of the first solution, and (c) preparing polyurethane foam by reacting a mixture of the first solution and the second solution.

Hereinafter, a detailed description will be given of a foaming agent composition for polyurethane according to the present invention and a method of preparing polyurethane foam using the same.

In the present invention, the foaming agent composition including glycerol carbonate, which is a chemical foaming agent for preparing polyurethane foam, includes glycerol carbonate as a chemical foaming agent of polyurethane foam and a physical foaming agent such as methyl formate and/or a chemical foaming agent such as polyhydric alcohol-based cyclic carbonate in an appropriate and ideal ratio, so methyl formate as the physical foaming agent is capable of controlling foam destabilization (splitting) and quick reaction due to internal heat generated when glycerol carbonate as a chemical foaming agent is used alone, and polyhydric alcohol-based cyclic carbonate as the chemical foaming agent is capable of enhancing foaming and crosslinking effects, thereby optimizing functions as a composite foaming agent.

Specifically, glycerol carbonate, which is a chemical foaming agent, exhibits a mechanism in which cyclic carbonate included in the structure and NCO of isocyanate react quickly to release carbon dioxide, causing foaming to occur simultaneously with polyurethane bonding, resulting in internal cells. Polyurethane foam produced by generation of carbon dioxide through this chemical change increases the strength of the surface and inside of the foam by increasing the formation of urethane crosslinkage due to NCO bonding. However, in this reaction, a decrease in initial foamability and foam splitting due to internal exothermic reaction are considered to be major problems. Therefore, mixed use of a physical foaming agent having a low boiling point and thus high foamability may be regarded as discovery of a stable mixed foaming agent (physicochemical foaming agent) that utilizes each other's advantages.

Formation of foam using the mixed foaming agent was confirmed to form very small and uniform cells, greatly affecting thermal conductivity and presumably providing very good properties as a thermal insulation material. Moreover, completion of quick crosslinking reaction may act as a very great advantage in foam for polyurethane boards and foam for spraying.

The present invention provides a foaming agent composition that simultaneously satisfies the criteria for very low global warming potential and ozone depletion potential.

ODP (ozone depletion potential) numerically represents the ozone-depleting ability of chemicals directly or indirectly involved in ozone depletion. ODP represents a relative ratio that indicates the ozone-depleting ability of another chemical as compared with the ozone-depleting ability of 1 kg of trichlorofluorocarbon (CFC-11), a type of chlorofluorocarbon, which is assigned a reference value of 1. As such, ODP is calculated as (amount of ozone destroyed by 1 kg of a certain compound/amount of ozone destroyed by 1 kg of CFC-11), and as a result of calculation, the higher the ozone depletion potential, the greater the extent of ozone depletion.

Each greenhouse gas has a different degree of contribution to global warming. In general, the contribution level of each gas based on carbon dioxide is specified as global warming potential (GWP), and when calculating greenhouse gas emissions, each country calculates emissions in units of tons of $CO_2$ in consideration of the global warming potential for each gas.

"GWP" is defined relative to carbon dioxide and relative to a period of 100 years, as indicated in "The Scientific Assessment of Ozone Depletion, 2002, a report of the World Meteorological Association's Global Ozone Research and Monitoring Project".

The mixed foaming agent composition according to the present invention has global warming potential of 0 to 50. Glycerol carbonate, a chemical foaming agent, has GWP of zero and ozone depletion potential of zero. The mixed physical foaming agent is an environmentally-friendly foaming agent with GWP and ODP having very low values, namely values close to "zero".

The foaming agent composition for polyurethane according to the present invention includes glycerol carbonate and a physical foaming agent and/or a chemical foaming agent such as polyhydric alcohol-based cyclic carbonate.

In the present invention, the physical foaming agent may be at least one selected from the group consisting of methyl formate, 1,3,3,3-tetrafluoropropene (HFO-1234ze), 1-chloro-3,3,3-trifluoropropene (HCFO-1233zd), cis-1,1,1,4,4,4-hexafluoro-2-butene (HFO-1336mzz-Z), pentafluoropropane (HFC-245fa), 1,1,1,3,3-pentafluorobutane (HFC-365mfc), 1,1-dichloro-1-fluoroethane (HCFC-141b), trans-1,2-dichloroethylene, methylal, c-pentane, n-pentane, i-pentane, 1-chloropropene, 2-chloropropene and 3-chloropropene. Preferably, methyl formate, pentafluoropropane (HFC-245fa), 1,1,1,3,3-pentafluorobutane (HFC-365mfc), or 1,1-dichloro-1-fluoroethane (HCFC-141b) is used, but the present invention is not limited thereto. In particular, methyl formate is preferable because it is inexpensive and environmentally friendly, and similar functions may be manifested using other types of physical foaming agents.

In the present invention, the chemical foaming agent may be a polyhydric alcohol-based cyclic carbonate, and the polyhydric alcohol may be at least one selected from the group consisting of glycerol, sorbitol, mannitol, erythritol, threitol, arabitol, xylitol, galactitol, and iditol.

In the present invention, the polyhydric alcohol-based cyclic carbonate is prepared by reacting polyhydric alcohol

with DMC (dimethyl carbonate), but the present invention is not limited thereto, and various cyclic carbonate structures may be included.

Cyclic carbonate derived from polyhydric alcohol increases effects of foaming and crosslinking due to two bonds that may be formed by reacting with isocyanate within one molecule, so good physical properties may be exhibited due to strong effects when glycerol carbonate is used in combination therewith compared to when glycerol carbonate is used alone. Since the -OH group possessed by cyclic carbonate may increase functionality, polyester polyol may be used, and in particular, the use of an additional crosslinking agent and polyol may be reduced.

Thereby, the foaming agent composition according to the present invention is capable of releasing carbon dioxide ($CO_2$) through chemical reaction with isocyanate and carrying out additional crosslinking reaction from excess alcohol (-OH). Such a foaming agent composition is a chemical composition that simultaneously serves as a foaming agent and a crosslinking agent, and is an environmentally-friendly foaming agent composition with GWP/ODP of zero.

It is possible to realize high compressive strength by virtue of high functionality and use of polyester polyol, and in particular, as the amount of polyhydric alcohol-based cyclic carbonate with high molecular weight is increased, shrinkage may be prevented, and reaction may be fast and crosslinking reaction may be promoted, thus reducing the amount of the catalyst that is used.

In the present invention, glycerol carbonate may be referred to as glycerin carbonate or 4-(hydroxymethyl)-1,3-dioxolan-2-one and has the structure of Chemical Formula 1 below. Methyl formate has the structure of Chemical Formula 2 below.

[Chemical Formula 1]

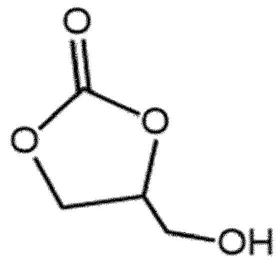

[Chemical Formula 2]

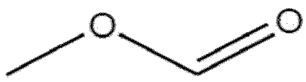

In the foaming agent composition for polyurethane according to the present invention, the amount of the physical foaming agent may be 0.01 to 99 parts by weight based on 100 parts by weight of glycerol carbonate. Given the above range, properties of products, such as reactivity, density, etc., may be adjusted.

If the amount of the physical foaming agent in the foaming agent composition for polyurethane according to the present invention is less than 0.01 parts by weight, foam splitting may occur due to internal heat and controlling the reaction rate may be difficult. On the other hand, if the amount thereof exceeds 99 parts by weight, poor storage stability of the system and shrinkage of the foam, which are disadvantages of methyl formate, may occur.

In the foaming agent composition for polyurethane according to the present invention, the amount of the chemical foaming agent may be 0.1 to 30 parts by weight based on 100 parts by weight of glycerol carbonate.

In the foaming agent composition for polyurethane according to the present invention, if the amount of polyhydric alcohol-based cyclic carbonate, which is a chemical foaming agent, exceeds 30 parts by weight based on the amount of glycerol carbonate, insufficient effects and poor properties may result. As confirmed in tests, when polyhydric alcohol-based cyclic carbonate was used in amounts of 10 parts by weight, 15 parts by weight, and 30 parts by weight, internal shrinkage decreased and compressive strength increased with an increase in the amount of polyhydric alcohol-based cyclic carbonate. Therefore, it is preferred that the amount of polyhydric alcohol-based cyclic carbonate be 30 parts by weight or less based on 100 parts by weight of glycerol carbonate, and thus the amount thereof has to be appropriately adjusted in the range of 0.1 to 30 parts by weight for use. The foaming agent composition for polyurethane according to the present invention may further include methyl(2-oxo-1,3-dioxolan-4-yl)methyl carbonate of Chemical Formula 3 in an amount of 10 parts by weight or less but greater than 0 parts by weight, preferably 0.01 to 10 parts by weight, or bis((2-oxo-1,3-dioxolan-4-yl)methyl)carbonate of Chemical Formula 4 in an amount of 5 parts by weight or less but

greater than 0 parts by weight, preferably 0.01 to 5 parts by weight, based on 100 parts by weight of glycerol carbonate. These components are those that are additionally synthesized during preparation and serve as a separate crosslinking agent by bonding of MDI with NCO and stable supply of $CO_2$.

[Chemical Formula 3]

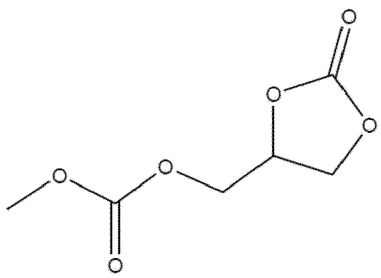

[Chemical Formula 4]

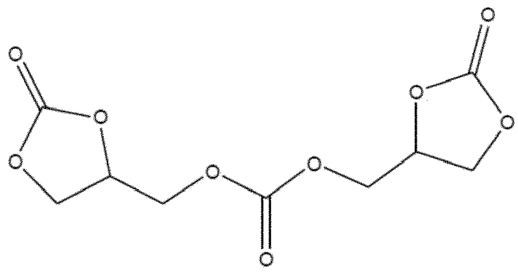

In the foaming agent composition for polyurethane according to the present invention, a large amount of glycerol carbonate, which is the main foaming agent, is required, whereas methyl(2-oxo-1,3-dioxolan-4-yl)methyl carbonate or bis((2-oxo-1,3-dioxolan-4-yl)methyl)carbonate is not a problem at all even when added in a very small amount. If the amount of methyl(2-oxo-1,3-dioxolan-4-yl)methyl carbonate exceeds 10 parts by weight or the amount of bis((2-oxo-1,3-dioxolan-4-yl)methyl)carbonate exceeds 5 parts by weight, excessive crosslinking may hinder the role of the foaming agent.

The foaming agent composition for polyurethane according to the present invention may further include 0.01 to 3 parts by weight of glycerol based on 100 parts by weight of glycerol carbonate. Glycerol is also referred to as propane-1,2,3-triol, has the structure of Chemical Formula 5 below, and serves as a crosslinking agent for polyurethane foam.

[Chemical Formula 5]

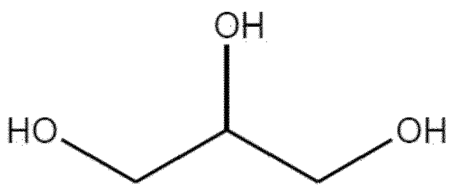

Also, in the foaming agent composition for polyurethane according to the present invention, polyhydric alcohol-based cyclic carbonate synthesized from polyhydric alcohol sorbitol and dimethyl carbonate is 4-(1,2,3,4-hydroxybutyl)-1,3-dioxolan-2-one (Chemical Formula 6), further including 6-(1,3-dioxolan-2-one-4-yl)-2,4-7-trioxa-3-oxy-bicyclo[3.3.0] octane (Chemical Formula 6-1) and sorbitol (Chemical Formula 6-2).

Also, polyhydric alcohol-based cyclic carbonate synthesized from polyhydric alcohol erythritol and dimethyl carbonate is 4-(1,2-dihydroxyethyl)-1,3-dioxolan-2-one (Chemical Formula 7), further including erythritol bis(carbonate) (Chemical Formula 7-1) and erythritol (Chemical Formula 7-2).

[Chemical Formula 6]

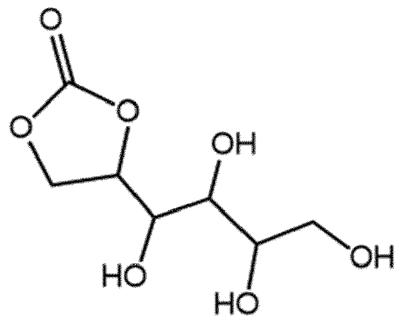

[Chemical Formula 6-1]

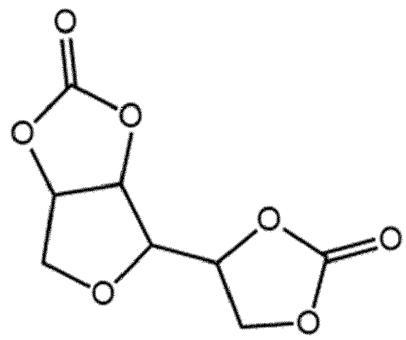

[Chemical Formula 6-2]

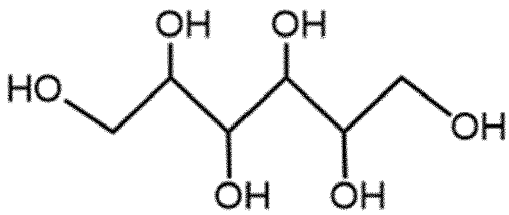

[Chemical Formula 7]

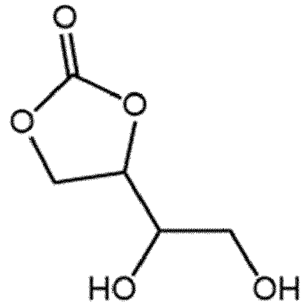

[Chemical Formula 7-1]

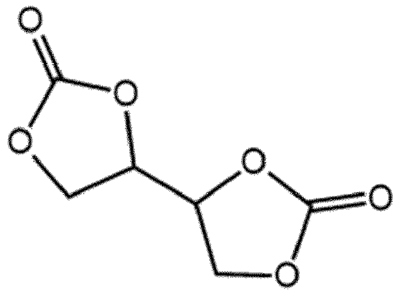

[Chemical Formula 7-2]

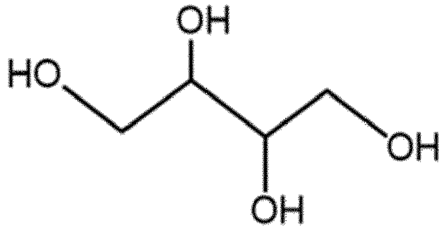

In the present invention, the product synthesized from polyhydric alcohol and dimethyl carbonate is not limited to the above chemical formulas and may include the following chemical formulas.

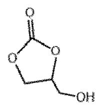
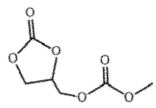
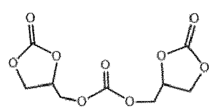
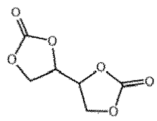
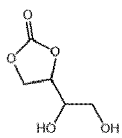
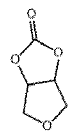

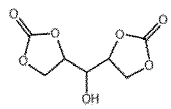
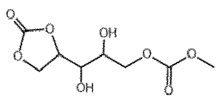
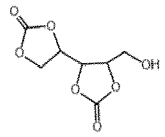
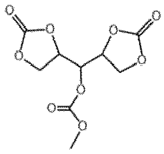
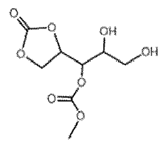

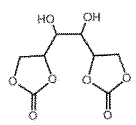
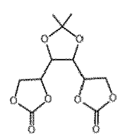
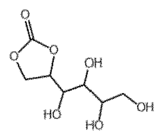
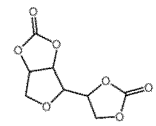
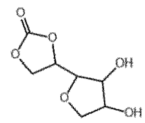
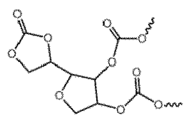

In the foaming agent composition for polyurethane according to the present invention, if the amount of glycerol that is added is less than 0.01 parts by weight, the functionality of polyol may be lowered, and thus the resulting foam may have low strength, causing shrinkage. On the other hand, if the amount thereof exceeds 30 parts by weight, a large amount of MDI may be required, roughening the surface of foam.

The polyurethane foam prepared using the foaming agent composition for polyurethane according to the present invention has thermal conductivity of 0.023 W/m·K or less, water absorption of 3.0 g/100 $cm^2$ or less, flexural failure load of 25 N or more, and compressive strength of 10 $N/cm^2$ or more.

Thermal conductivity, which is one of the most important properties of insulation materials corresponding to Type 2 and No. 2 (density of 35 or more) in the standard for thermal insulation materials made of rigid urethane foam (according to KS M 3809), is required to be 0.023 or less, and the foaming agent composition for polyurethane according to the present invention effectively satisfies the same.

The method of preparing polyurethane foam according to the present invention includes (a) preparing a first solution including a polyol, a surfactant, water, a catalyst, trichloropropyl phosphate, and the foaming agent composition

described above, (b) mixing 100 parts by weight of the first solution with 100 to 150 parts by weight of a second solution including polyisocyanate based on 100 parts by weight of the first solution, and (c) preparing polyurethane foam by reacting a mixture of the first solution and the second solution.

In the present invention, the polyol may be a mixture of one or more polyol components, and any polyol component containing two or more reactive groups, preferably OH groups, particularly polyether alcohol and/or polyester alcohol having a hydroxyl value in the range of 200 to 600 mg KOH/g. Specifically, the polyol may be a polyol mixture including 25 wt% to 35 wt% of polyol having a hydroxyl value of 450 to 500 mg KOH/g obtained by adding glycerin and propylene glycol to sucrose, 15 wt% to 25 wt% of sucrose polyol having a hydroxyl value of 360 to 400 mg KOH/g obtained by adding glycerin and propylene glycol to sucrose, 15 wt% to 25 wt% of sorbitol polyol having a hydroxyl value of 460 to 520 mg KOH/g obtained by adding propylene glycol to sorbitol, and 25 wt% to 35 wt% of polyether polyol having a hydroxyl value of 300 to 350 mg KOH/g obtained by adding ethylene oxide and propylene oxide to bromine-substituted glycerin. Alternatively, the polyol may be a polyol mixture including 30 wt% of polyol having a hydroxyl value of 450 to 500 mg KOH/g obtained by adding glycerin and propylene glycol to sucrose, 20 wt% of sucrose polyol having a hydroxyl value of 360 to 400 mg KOH/g obtained by adding glycerin and propylene glycol to sucrose, 20 wt% of sorbitol polyol having a hydroxyl value of 460 to 520 mg KOH/g obtained by adding propylene glycol to sorbitol, and 30 wt% of polyether polyol having a hydroxyl value of 300 to 350 mg KOH/g obtained by adding ethylene oxide and propylene oxide to bromine-substituted glycerin.

In the present invention, the catalyst may promote reaction between the isocyanate group in polyisocyanate and the active hydrogen-containing group in polyol. Such a reaction catalyst contains both an amine such as dimethylcyclohexylamine and a salt such as potassium octoate, but the present invention is not limited thereto, and a tin catalyst, a bismuth catalyst, a zinc catalyst, and the like may also be used. The amount of the reaction catalyst that is used is the amount typically used for promoting the reaction. Furthermore, the components of the catalyst may be used alone or in combination of two or more, as necessary. A specific example of the catalyst is the use of equal weights of dimethylcyclohexylamine and potassium octoate. Preferably, each of amine and potassium octoate is included in an amount of 0.5 to 2 parts by weight based on 100 parts by weight of the polyol. If the amount thereof is less than 0.5 parts by weight, the effect of promoting reaction may be insufficient, whereas if the amount thereof exceeds 2 parts by weight, catalytic efficiency may be lowered.

In the present invention, the surfactant is used, preferably a silicone surfactant, for example, L-6900. A commercially available product may be used therefor. The silicone surfactant is preferably included in an amount of 1 to 5 parts by weight based on 100 parts by weight of the polyol. If the amount of the silicone surfactant is less than 1 part by weight, the surfactant effect may be insignificant, whereas if the amount thereof exceeds 5 parts by weight, only waste of raw materials may be caused without additional surfactant effects.

A better understanding of the present invention may be obtained through the following examples. These examples are merely set forth to illustrate the present invention, and are not to be construed as limiting the scope of the present invention, as will be obvious to those skilled in the art.

[Examples]

Examples 1 to 6 and Comparative Examples 1 and 2: Preparation of polyurethane foam

As shown in Table 1 below, polyurethane foam was prepared by adding 100 parts by weight of polyol (polyether polyol (OHV = 400-490): 20 to 30 parts by weight and polyester polyol (OHV = 320): 70 to 80 parts by weight), 2 parts by weight of a silicone surfactant, 20 parts by weight of TCPP, 3.5 parts by weight of CAT 1, and 2.5 parts by weight of CAT 2, and also adding $H_2O$, NeXgener, MF, 365/245, and 141b in amounts shown in Table 1 below.

Here, NeXgener was glycerol carbonate + methyl(2-oxo-1,3-dioxolan-4-yl)methyl carbonate (A) + bis((2-oxo-1,3-dioxolan-4-yl)methyl)carbonate (B) + glycerol, and as a physical foaming agent, MF was methyl formate, 365/245 was HFC-365mfc (70)/HFC-245fa (30), and HCFC-141b, HFO-1234ze, and trans-1,2-dichloroethylene were used. CAT 1 and CAT 2 used herein were pentamethyldiethylenetriamine and potassium octoate, respectively.

Examples 7 to 10 and Comparative Example 3: Preparation of polyurethane foam

As shown in Table 2 below, polyurethane foam was prepared by adding 85 parts by weight of polyol (polyester polyol (OHV= 320)), 2.5 parts by weight of a silicone surfactant, 25 parts by weight of TCPP, 0.6 parts by weight of CAT 1, 0.5 parts by weight of CAT 2, 0.6 parts by weight of CAT 3, and 5 parts by weight of $H_2O$.

Here, A was methyl(2-oxo-1,3-dioxolan-4-yl)methyl carbonate of Chemical Formula 3, B was bis((2-oxo-1,3-dioxolan-4-yl)methyl)carbonate of Chemical Formula 4, and glycerin was a compound of Chemical Formula 5.

Examples 11 to 14 and Comparative Examples 4 and 5: Preparation of polyurethane foam

As shown in Table 3 below, polyurethane foam was prepared by adding 85 parts by weight of polyol (polyester polyol (OHV= 320)), 2.5 parts by weight of a silicone surfactant, 25 parts by weight of TCPP, 0.3 parts by weight of CAT 1, and 0.3 parts by weight of CAT 2.

Here, C was a cyclic carbonate (Chemical Formula 6) synthesized from polyhydric alcohol sorbitol and DMC, further including a cyclic carbonate (Chemical Formula 6-1) and a raw material (Chemical Formula 6-2), D was a cyclic carbonate (Chemical Formula 7) synthesized from polyhydric alcohol erythritol and DMC, further including a cyclic carbonate (Chemical Formula 7-1) and a raw material (Chemical Formula 7-2), and as a physical foaming agent, methyl formate (MF) was used. The polyester polyol used was any polyol component containing an OH group, with a hydroxyl value in the range of 305 to 345 mg KOH/g and a viscosity in the range of 2500 to 3500 cP/25°C. The polyester polyol used was SP-320G available from SEHOTECH Inc., but the use of polyether polyol was possible.

[Test Examples]

Test Example 1: Measurement of apparent density of rigid polyurethane foam

Apparent density of polyurethane foam was measured according to KS M ISO 845 and the following. The thickness of a thermal insulation board was the same as that of the sample, and the sample was cut into three test pieces of about 100 mm*100 mm.

$$\text{Density (kg/m}^3\text{)} = m/V$$

Test Example 2: Measurement of shrinkage of rigid polyurethane foam

For measurement of shrinkage, the foam sample was exactly cut into three test pieces with a cube size of 50*50*50. The volume change of foam was measured by allowing the same to stand at about -30°C (a freezer compartment in a refrigerator) for 48 hours.

$$\text{Volume change (shrinkage, \%)} = (V1-V2)/V1 * 100$$

The volume was measured using a floating method in water.

Test Example 3: Measurement of thermal conductivity of rigid polyurethane foam

Thermal conductivity of the polyurethane foam of Examples and Comparative Examples was measured according to KS L 9016 using a thermal conductivity meter (Model No.: MA01906) available from Laser Comp.

Test Example 4: Measurement of compressive strength of rigid polyurethane foam

Compressive strength of the polyurethane foam of Examples was measured according to KS M ISO 844 using a universal testing machine.

Test Example 5: Measurement of water absorption of rigid polyurethane foam

1) The skin was removed from the sample, the sample was cut into three test pieces of 100 mm*100 mm*25 mm, and dimensions thereof were measured.

2) Each test piece was immersed 50 mm below the water surface of a container filled with clear water at about 25°C. After 10 seconds, the test piece was taken out and then allowed to stand for 30 seconds, after which the weight thereof was measured and determined as the reference weight (C). After the sample was immersed again in clear water and absorbed for 24 hours, the weight (B) thereof was measured. The water absorption was calculated using the following equation.

$$\text{Water absorption (g/100 cm}^2\text{)} = \text{(B-C)/surface area} * 100$$

Test Example 6: Measurement of flexural failure load of rigid polyurethane foam

Flexural failure load of the polyurethane foam of Examples was measured according to KS M ISO 1209-1 and 1209-2 using a universal testing machine.

Table 1 below shows properties of the rigid polyurethane foam of each of Examples 1 to 6 and Comparative Examples 1 and 2.

[Table 1]

| Example/Comparative Example | Example 1 | Example 2 | Example 3 | Example 4 | Example 5 | Example 6 | Comparative Example 1 | Comparative Example 2 |
|---|---|---|---|---|---|---|---|---|
| Polyether polyol (OHV= 400-490): 20-30<br>Polyester polyol (OHV=320): 70-80<br>Silicone surfactant: 2<br>TCPP: 20<br>CAT 1: 3.5<br>CAT 2: 2.5 | | | | | | | | |
| $H_20$ | 1.5 | 1.5 | 1.5 | 2.0 | 2.5 | 1.5 | 1.0 | 1.5 |
| NeXgener | 20 | 15 | 15 | 15 | 15 | 15 | | |
| MF | | 5 | | | | | | |
| HFC-365/245 | | | 5 | | | | 25 | |
| HFO-1234ze | | | | 5 | | | | 25 |
| HCFC-141b | | | | | 5 | | | |
| t-DCE | | | | | | 5 | | |
| c-MDI/resin | 120/100 | | | | | | | |
| Apparent density (kg/m$^3$) | 32 | 32 | 32 | 33 | 32 | 32 | 32 | 32 |
| Shrinkage (%) | 10 | 0 | 0 | 0 | 0 | 0 | 5 | 5 |
| Thermal conductivity (W/m·K) | 0.022 | 0.019 | 0.019 | 0.020 | 0.021 | 0.021 | 0.023 | 0.023 |
| Compressive strength (N/m$^2$) | 35 | 24 | 24 | 22 | 21 | 21 | 20 | 19 |
| Water absorption (g/100cm$^2$) | 1.5 | 1.5 | 1.6 | 1.8 | 1.9 | 1.9 | 2.2 | 2.0 |
| Flexural failure load (N) | 27 | 28 | 27 | 27 | 27 | 24 | 23 | 22 |

The polyurethane foam prepared using the foaming agent composition for polyurethane according to the present invention had thermal conductivity of 0.023 W/m·K or less, water absorption of 3.0 g/100 cm$^2$ or less, flexural failure load of 25 N or more, and compressive strength of 10 N/cm$^2$ or more, and satisfied the standard for thermal insulation materials made of rigid urethane foam (KS M 3809).

Table 2 below shows properties of the rigid polyurethane foam of each of Examples 7 to 10 and Comparative Example 3. Here, foam was evaluated to be excellent, good, fair, or poor in the order of increasing cell size. Also, foam that did not shrink even after a predetermined time (24 hours) was judged to be excellent, foam that underwent some micro-shrinkage was judged to be good or fair depending on the extent of shrinkage, and foam that was decreased in size due to complete shrinkage was judged to be poor. For internal heat generation, depending on the extent of smoke

due to generated heat, the case in which the amount of smoke generated was large was judged to be poor, the case in which the amount of smoke generated was smaller was judged to be fair, the case in which the amount of smoke generated was not large but smoke was present was judged to be good, and the case in which there was no smoke was judged to be excellent. Friability is the extent of breakage when force is applied to the outer surface of foam, and the case in which foam was broken by certain force was judged to be poor, whereas the case in which foam was not broken was judged to be excellent. CAT 1, CAT 2, and CAT 3 used were pentamethyldiethylenetriamine, potassium octoate, and dimethylcyclohexylamine, respectively.

[Table 2]

| Example/Comparative Example | Comparative Example 3 | Example 7 | Example 8 | Example 9 | Example 10 |
|---|---|---|---|---|---|
| Polyester polyol (OHV=320): 85<br>Silicone surfactant: 2.5<br>TCPP (flame retardant): 25<br>CAT 1: 0.6<br>CAT 2: 0.5<br>CAT 3: 0.6<br>$H_2O$: 5 | | | | | |
| Glycerol carbonate | 20 | 20 | 20 | 20 | 20 |
| A | | 2 | 2 | 4 | 2 |
| B | | 1 | 1 | 1 | 2 |
| Glycerin | | | 6 | 6 | 6 |
| Apparent density (FRD, kg/m$^3$) | 21.4 | 21.5 | 21.3 | 21.5 | 21.4 |
| Shrinkage | X | △ | ○ | ○ | ○ |
| Internal heat generation | X | △ | ○ | Δ | X |
| ◎: excellent, ◦: good, : fair, X: poor | | | | | |

As shown in Table 2, when glycerol carbonate was used alone, severe internal heat generation and shrinkage occurred due to problems such as quick reaction, etc., but the extent thereof was reduced upon foaming using appropriate amounts of A and B mixed. Based on the above results, when an appropriate amount of glycerin was added, heat generation and shrinkage could be suppressed to good levels. However, when the amounts of A and B exceeded predetermined levels, internal heat was generated due to excessive foaming and crosslinking reaction.

Table 3 below shows properties of the rigid polyurethane foam of each of Examples 11 to 14 and Comparative Examples 4 and 5.

[Table 3]

| Example/ Comparati ve Example | Comparati ve Example 4 | Comparati ve Example 5 | Example 11 | Example 12 | Example 13 | Example 14 |
|---|---|---|---|---|---|---|
| Polyester polyol (OHV=320): 85<br>Silicone surfactant: 2.5<br>TCPP: 25<br>CAT 1: 0.3<br>CAT 2: 0.3 | | | | | | |
| $H_2O$ | 1.3 | 5 | 5 | 5 | 5 | 5 |
| Glycerol carbonate | | 25 | 22.5 | 21.25 | 17.5 | 17.5 |
| C | | | 2.5 | 3.75 | 7.5 | |
| D | | | | | | 7.5 |

(continued)

| Example/ Comparati ve Example | Comparati ve Example 4 | Comparati ve Example 5 | Example 11 | Example 12 | Example 13 | Example 14 |
|---|---|---|---|---|---|---|
| MF | 20 | | | | | |
| CT/GT/TFT | 86/154/197 | 87/156/198 | 86/156/19 5 | 85/154/19 7 | 87/157/19 8 | 86/157/19 7 |
| FRD ($kg/m^3$) | 21.5 | 21.9 | 21.8 | 21.9 | 21.8 | 21.8 |
| Dov ($kg/m^3$) | 40.6 | 40.7 | 41.8 | 41.9 | 42.0 | 41.9 |
| Dco ($kg/m^3$) | 48.5 | 48.7 | 49.1 | 49.1 | 49.3 | 49.2 |
| Cell | X | X | ○ | ◎ | ◎ | ◎ |
| Shrinkage | △ | X | ○ | ◎ | ◎ | ◎ |
| Internal heat generation | ◎ | X | ○ | ◎ | ◎ | ◎ |
| Friability | ◎ | ◎ | ◎ | ◎ | ◎ | ◎ |
| Compressive strength (MPa) | 3.012 | 2.847 | 3.165 | 3.545 | 3.886 | 3.852 |
| c-MDI/resin | 150/100 | | | | | |

Referring to Table 3, when water ($H_2O$) is used in a large amount, problems such as friability, etc. occur, so it is common to minimize the amount of water. However, since water has a complementary function with the foaming agent composition for polyurethane, when the amount of water is increased, the problem of internal heat generation that occurs when glycerol carbonate is used alone may be solved and crosslinking may be promoted.

When glycerol carbonate was used alone in the foaming agent composition for polyurethane, internal shrinkage and cracking occurred, but could be compensated for by adding 30 parts by weight of polyhydric alcohol-based cyclic carbonate. In particular, when polyester polyol was used alone in the preparation of foam, MF, which is typically used, caused internal shrinkage, but it was confirmed that there was no internal shrinkage when 30 parts by weight of polyhydric alcohol-based cyclic carbonate was added.

As is apparent from the above description, polyurethane foam prepared using a foaming agent composition for polyurethane according to the present invention has very low global warming potential and ozone depletion potential and simultaneously improved properties such as thermal conductivity, water absorption, flexural strength, and compressive strength that meet the standard for thermal insulation materials made of rigid urethane foam.

In addition, since post-curing is fast, spraying is particularly advantageous, and it is suitable to use ester polyol, which improves flame retardancy and has a price reduction effect. Also, an anti-shrinkage effect can be exhibited without the need to use sorbitol-based ether polyol that is used to prevent shrinkage of foam but has a problem due to high viscosity.

In addition, the foaming agent is environmentally friendly by virtue of storage stability after system formation and superior compatibility during system formation.

Having described specific parts of the present invention in detail above, it will be obvious to those skilled in the art that these specific descriptions are only preferred embodiments, and the scope of the present invention is not limited thereby. Accordingly, the substantial scope of the present invention will be defined by the appended claims and equivalents thereto.

## Claims

1. A polyurethane foaming agent composition comprising:

   (i) glycerol carbonate; and
   (ii) at least one of a physical foaming agent and a chemical foaming agent.

2. The polyurethane foaming agent composition of claim 1, wherein the physical foaming agent is at least one selected

from the group consisting of methyl formate, 1,3,3,3-tetrafluoropropene, 1-chloro-3,3,3-trifluoropropene, cis-1,1,1,4,4,4-hexafluoro-2-butene, pentafluoropropane, 1,1,1,3,3-pentafluorobutane, 1,1-dichloro-1-fluoroethane, trans-1,2-dichloroethylene, methylal, c-pentane, n-pentane, i-pentane, 1-chloropropene, 2-chloropropene and 3-chloropropene.

**3.** The polyurethane foaming agent composition of claim 1, wherein the chemical foaming agent is a polyhydric alcohol-based cyclic carbonate.

**4.** The polyurethane foaming agent composition of claim 3, wherein the polyhydric alcohol is at least one selected from the group consisting of glycerol, sorbitol, mannitol, erythritol, threitol, arabitol, xylitol, galactitol, and iditol.

**5.** The polyurethane foaming agent composition of claim 1, wherein respective amounts of the physical foaming agent and the chemical foaming agent are 0.01 to 99 parts by weight and 0.1 to 30 parts by weight based on 100 parts by weight of glycerol carbonate.

**6.** The polyurethane foaming agent composition of claim 1, further comprising 10 parts by weight or less but greater than 0 parts by weight of methyl(2-oxo-1,3-dioxolan-4-yl)methyl carbonate or 5 parts by weight or less but greater than 0 parts by weight of bis((2-oxo-1,3-dioxolan-4-yl)methyl)carbonate based on 100 parts by weight of glycerol carbonate.

**7.** The polyurethane foaming agent composition of claim 1, further comprising 0.01 to 30 parts by weight of glycerol based on 100 parts by weight of the glycerol carbonate.

**8.** The polyurethane foaming agent composition of claim 1, further comprising 0.1 to 30 parts by weight of water based on 100 parts by weight of the glycerol carbonate.

**9.** A method of preparing polyurethane foam, comprising:

(a) preparing a first solution comprising a polyol, a surfactant, water, a catalyst, trichloropropyl phosphate, and the polyurethane foaming agent composition of any one of claims 1 to 8;
(b) mixing 100 parts by weight of the first solution with 100 to 150 parts by weight of a second solution comprising polyisocyanate based on 100 parts by weight of the first solution; and
(c) preparing polyurethane foam by reacting a mixture of the first solution and the second solution.

**10.** The method of preparing polyurethane foam of claim 9, wherein the polyurethane foam has thermal conductivity of 0.023 W/m·K or less but greater than 0.018 W/m. K, water absorption of 3.0 g/100 $cm^2$ or less but greater than 0 g/100 $cm^2$, flexural failure load of 100 N or less but greater than 25 N, and compressive strength of 20 $N/cm^2$ or less but greater than 10 $N/cm^2$.

Europäisches Patentamt
European Patent Office
Office européen des brevets

# EUROPEAN SEARCH REPORT

Application Number
EP 23 20 3498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>Y | EP 0 419 114 B1 (ICI PLC [GB]) 24 May 1995 (1995-05-24)<br>* page 5; examples 1 (polyol composition 3), 4 (polyol composition C) *<br>* page 4, lines 14-20 *<br>----- | 1-8<br>9,10 | INV.<br>C08J9/02<br>C08J9/08<br>C08J9/14<br>C08G18/32 |
| X<br>Y | EP 0 708 790 B1 (ICI PLC [GB]) 9 September 1998 (1998-09-09)<br>* page 2, line 42 - page 4, line 22 *<br>* example 1 *<br>----- | 1-8<br>9,10 | |
| X<br>Y | US 2023/002540 A1 (SHERREN BRETT TYLER [CA] ET AL) 5 January 2023 (2023-01-05)<br>* paragraphs [0165] - [0166], [0188] - [0189], [0196]; examples 13-16; tables 9, 15, 16 *<br>* paragraphs [0043], [0084], [0118] - [0119] *<br>----- | 1-8<br>9,10 | |
| Y | US 9 868 837 B2 (CHEN BENJAMIN BIN [US]; COSTA JOSEPH S [US] ET AL.) 16 January 2018 (2018-01-16)<br>* example 1; table 1 *<br>----- | 9,10 | TECHNICAL FIELDS SEARCHED (IPC)<br>C08J<br>C08G |

The present search report has been drawn up for all claims

| Place of search | Date of completion of the search | Examiner |
|---|---|---|
| The Hague | 28 March 2024 | Mayer, Anne |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 20 3498

This annex lists the patent family members relating to the patent documents cited in the above-mentioned European search report. The members are as contained in the European Patent Office EDP file on
The European Patent Office is in no way liable for these particulars which are merely given for the purpose of information.

28-03-2024

| Patent document cited in search report | Publication date | Patent family member(s) | Publication date |
|---|---|---|---|
| EP 0419114 B1 | 24-05-1995 | AT E123042 T1 | 15-06-1995 |
| | | AU 632619 B2 | 07-01-1993 |
| | | CA 2025397 A1 | 20-03-1991 |
| | | DE 69019651 T2 | 26-10-1995 |
| | | EP 0419114 A2 | 27-03-1991 |
| | | ES 2072398 T3 | 16-07-1995 |
| | | HK 196196 A | 01-11-1996 |
| | | JP 3042869 B2 | 22-05-2000 |
| | | JP H03152111 A | 28-06-1991 |
| | | KR 910006355 A | 29-04-1991 |
| | | NZ 235259 A | 25-09-1992 |
| | | PL 286919 A1 | 03-06-1991 |
| | | US 5112879 A | 12-05-1992 |
| | | US 5132040 A | 21-07-1992 |
| | | ZA 907190 B | 31-07-1991 |
| EP 0708790 B1 | 09-09-1998 | AU 680018 B2 | 17-07-1997 |
| | | CA 2166071 A1 | 26-01-1995 |
| | | CN 1127004 A | 17-07-1996 |
| | | CN 1172820 A | 11-02-1998 |
| | | CN 1172821 A | 11-02-1998 |
| | | DE 69413231 T2 | 04-03-1999 |
| | | EP 0708790 A1 | 01-05-1996 |
| | | ES 2121216 T3 | 16-11-1998 |
| | | HK 1009971 A1 | 11-06-1999 |
| | | JP H09502209 A | 04-03-1997 |
| | | MY 131677 A | 30-08-2007 |
| | | NZ 268579 A | 29-01-1997 |
| | | TW 321659 B | 01-12-1997 |
| | | WO 9502620 A1 | 26-01-1995 |
| US 2023002540 A1 | 05-01-2023 | CA 3159433 A1 | 03-06-2021 |
| | | CN 115023455 A | 06-09-2022 |
| | | EP 4065622 A1 | 05-10-2022 |
| | | US 2023002540 A1 | 05-01-2023 |
| | | WO 2021108289 A1 | 03-06-2021 |
| US 9868837 B2 | 16-01-2018 | BR 112012027758 A2 | 26-07-2016 |
| | | CA 2797679 A1 | 03-11-2011 |
| | | CN 102858829 A | 02-01-2013 |
| | | CN 107090090 A | 25-08-2017 |
| | | EP 2563829 A1 | 06-03-2013 |
| | | JP 5947788 B2 | 06-07-2016 |
| | | JP 2013525574 A | 20-06-2013 |
| | | US 2013041048 A1 | 14-02-2013 |
| | | WO 2011137033 A1 | 03-11-2011 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 23 20 3498

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2024

| Patent document cited in search report | Publication date | Patent family member(s) | Publication date |
|---|---|---|---|
| ------------------------------------------------------------------------------------------------ | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230005540
- KR 1020230107826
- US 7144926 B
- KR 101532221
- KR 1020160023050
- US 5703136 A
- EP 0419114 A2


### Non-patent literature cited in the description


- **MATTHIEU O. SONNATI et al.** Glycerol carbonate as a versatile building block for tomorrow: synthesis, reactivity, properties and applications. *Green Chem.,* 2013, vol. 15, 283-306